# EUROPEAN PATENT SPECIFICATION

(11) **EP 4 067 748 B1**
(45) Date of publication and mention of the grant of the patent: **25.03.2026**
(21) Application number: 20892689.9
(22) Date of filing: 10.09.2020
(51) Int. Cl.: F24C 7/08, F24C 15/10, H05B 6/12, H05B 6/06

(54) **ELECTRIC COOKER PROVIDING SPECIFIC FUNCTIONS WITHOUT USER INTERVENTION**
ELEKTRISCHES KOCHGERÄT MIT SPEZIFISCHEN FUNKTIONEN OHNE BENUTZEREINGRIFF
CUISEUR ÉLECTRIQUE FOURNISSANT DES FONCTIONS SPÉCIFIQUES SANS INTERVENTION DE L'UTILISATEUR

(30) Priority: 25.11.2019 KR 20190152542
(43) Date of publication of application: 05.10.2022
(73) Proprietor: LG ELECTRONICS INC., Yeongdeungpo-gu Seoul 07336 (KR)
(72) Inventor: SON, Howon, Seoul 08592 (KR)
(74) Representative: Vossius & Partner Patentanwälte Rechtsanwälte mbB
(86) International application number: PCT/KR2020/012219
(87) International publication number: WO 2021/107354

(56) References cited:
- EP-A1- 2 527 747
- EP-A1- 2 931 005
- EP-A1- 3 244 694
- EP-A2- 0 967 839
- WO-A1-2014/090864
- DE-A1- 102016 109 889
- JP-B2- 6 322 874
- KR-A- 20160 036 449
- KR-A- 20180 047 428
- KR-A- 20180 096 082
- KR-A- 20190 058 972

## Description

### [Technical Field]

The present disclosure relates to an electric range that provides specific functions without user intervention.

### [Background Art]

In homes or restaurants, various types of cooking utensils for heating food are used. The above-described cooking utensils include a gas stove using gas and an electric range using electricity.

The electric range is roughly divided into a resistance heating type electric range and an induction heating type electric range. The resistance heating type electric range generates heat by applying a current to a metal resistance line or a nonmetal heating element such as silicon carbide, and heats an item (e.g. a cooking vessel such as a pot or frying pan) by radiating or conducting the generated heat. The induction heating type electric range generates a magnetic field around a coil by applying high frequency power to the coil, and heats an item made of a metallic material by using an eddy current generated from the generated magnetic field.

The heat power of the gas stove is adjusted through a knob operation, and the heat power of the electric range is controlled through a touch operation. However, compared to the knob operation, the touch operation cannot rapidly adjust heat power.

For example, when content of a cooking vessel boils over or is overheated, a user who uses the gas stove can rapidly lower heat power by rapidly rotating a knob, but a user who uses the electric range needs to repeatedly perform touch operations for adjusting heat power, and thus cannot rapidly lower the heat power.

Furthermore, the electric range provides various additional functions in addition to the heat power providing function. For example, the electric range provides a child lock function of an input interface and a timer function.

In the conventional electric range, however, a user needs to select an additional function by performing a separate operation in person.
EP 967 839 A2 discloses a cooking field having a cooking hob with at least one cooking zone provided with an electric heating element positioned beneath the hob surface.
EP 2 527 747 A1 discloses a device having a cookware detecting unit for detecting a change in the orientation or position of a cooking vessel, particularly pot or pan, on a cooking area of a hob.
DE 10 2016 109 889 A1 discloses a cooktop device comprising a housing device, a frame device and a support plate.
EP 2 931 005 A1 discloses a method for operating a cooktop device and cooktop device, wherein the cooktop device has a cooktop to which a plurality of induction coils and a smaller and predetermined number of display units are assigned.

### [DISCLOSURE]

### [Technical Problem]

An object of the present disclosure is to provide an electric range capable of rapidly adjusting heat power.

A further object of the present disclosure is to provide electric range capable of adjusting heat power by using a user's gesture for a cooking vessel.

A further object of the present disclosure is to provide electric range capable of settling an emergency situation without a user's separate manipulation, even when the emergency situation occurs while cooking is performed.

A further object of the present disclosure is to provide electric range that conveniently provides additional functions different from a main function of providing heat power.

The objects of the present disclosure are not limited to the above-described objects, and other objects and advantages of the present disclosure, which are not mentioned, may be understood through the following descriptions, and more clearly understood by embodiments of the present disclosure. Furthermore, it may be easily known that the objects and advantages of the present disclosure can be implemented through means described in the claims.

### [Technical Solution]

According to technique features of the present disclosure, an electric range adjusts heat power when a user makes a gesture of sliding a heated item in a specific direction. Furthermore, the electric range provides an additional function when a user makes a gesture of sliding a heated item in a specific direction.
The present invention is defined by independent claim 1; the dependent claims describe embodiments of the present invention.

In an embodiment, an electric range may include: a case; a plurality of heating units arranged in the case, and disposed at a plurality of regions so as to be spaced apart from each other; a cover plate coupled to the top of the case; an input interface disposed on a top surface of the cover plate, and configured to display a specific image; and a control unit configured to control the heating units and the input interface. An item to be heated may be located at a first position on the top surface of the cover plate, and heated by the heating unit disposed at the first position. When the heated item is slid in a first direction of a vertical direction and a horizontal direction on the top surface of the cover plate, the control unit may adjust heat power of the heating unit disposed in the first direction, and when the heated item is slid in a second direction of the vertical and horizontal directions, the control unit may control at least one of the input interface and the heating unit disposed in the second direction in order to provide an additional function.

In an embodiment, an electric range includes a case; a plurality of heating units arranged in the case, and disposed at a plurality of regions so as to be spaced apart from each other; a cover plate coupled to the top of the case; an input interface disposed on a top surface of the cover plate, and configured to display a specific image; a speaker disposed on the top surface of the cover plate; and a control unit configured to control the heating units and the input interface and may comprise a microphone disposed on the top surface of the cover plate. An item to be heated may be located at a first position on the top surface of the cover plate, and heated by the heating unit disposed at the first position. When the heated item is slid in a first direction of a vertical direction and a horizontal direction on the top surface of the cover plate, the control unit may control the speaker to output a guidance message for adjusting heat powers of two or more heating units disposed in the first direction, or control the input interface to display a third image corresponding to the guidance message. An item to be heated may be located at a first position on the top surface of the cover plate, and heated by the heating unit disposed at the first position. When the heated item is slid in any one direction of a vertical direction and a horizontal direction on the top surface of the cover plate, the control unit may control at least one of the input interface and the heating unit disposed in the any one direction in order to provide an additional function. The additional function is a different function from a main function of the heating unit to provide heat power.

### [Advantageous Effects]

The electric range in accordance with the present disclosure may rapidly adjust heat power.

Furthermore, in accordance with the present disclosure, the electric range may adjust heat power by using a user's gesture for a cooking vessel.

Furthermore, in accordance with the present disclosure, the electric range may settle an emergency situation without a user's separate manipulation, even when the emergency situation occurs while cooking is performed.

Furthermore, in accordance with the present disclosure, the electric range may conveniently provide additional functions different from a main function of providing heat power.

The above-described effects and specific effects of the present disclosure will be described while specific items for carrying out the present disclosure are described.

### [Brief Description of Drawings]

FIG. 1 is a perspective view illustrating a zone free-type induction heating device in accordance with an embodiment of the present disclosure.
FIG. 2 is a plan view illustrating the zone free-type induction heating device from which some components of FIG. 1 are omitted.
FIG. 3 is a schematic view for describing a control flow of the zone free-type induction heating device of FIG. 1.
FIG. 4 is a diagram illustrating a situation in which a heated item is slid on the top surface of the induction heating device in accordance with the embodiment of the present disclosure.
FIGS. 5 to 8 are diagrams for describing the concept of an operation of adjusting heat power through a working coil, when a heated item is slid in a vertical direction, in accordance with the embodiment of the present disclosure.
FIGS. 9 to 11 are diagrams for describing the concept of an operation of the induction heating device to provide an additional function when a heated item is slid in a horizontal direction, in accordance with the embodiment of the present disclosure.

### [Mode for Invention]

The above-described objects, features and advantages will be described below in detail with reference to the accompanying drawings. Thus, the technical idea of the present disclosure can be easily carried out by those skilled in the art to which the present disclosure pertains.

Hereafter, electric ranges in accordance with some embodiments of the present disclosure will be described. The same reference numerals in the drawings are used to represent like or similar components.

The electric range described in the present disclosure includes both a resistance heating type electric range and an induction heating type electric range, i.e. an induction heating device. At this time, for convenience of description, a zone free-type induction heating device will be taken as an example for description of the embodiments of the present disclosure. However, the present disclosure is not limited thereto. In particular, the present disclosure may be applied to other types of induction heating devices (e.g. flex type, half flex type, dual type and like) as well as a resistance heating type electric range and a zone free-type induction heating device.

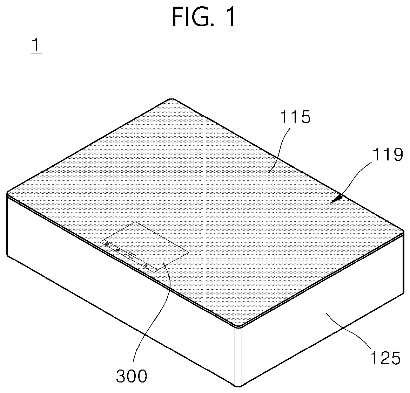

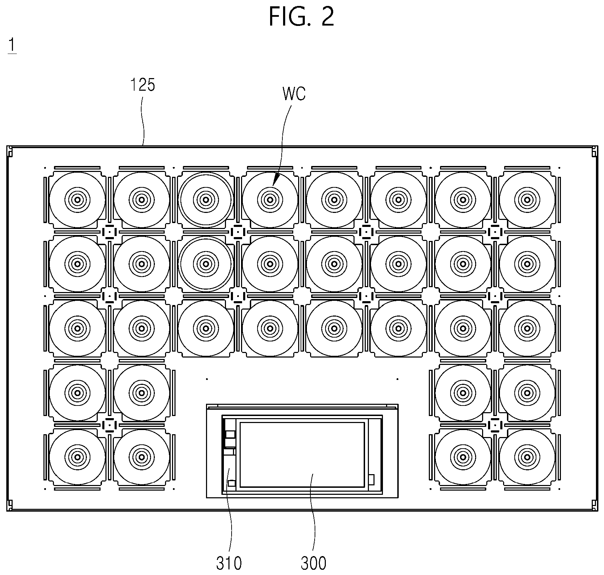

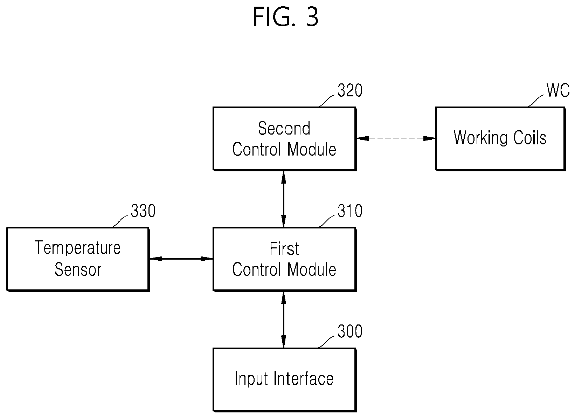

FIG. 1 is a perspective view illustrating a zone free-type induction heating device in accordance with an embodiment of the present disclosure. FIG. 2 is a plan view illustrating the zone free-type induction heating device from which some components of FIG. 1 are omitted. FIG. 3 is a schematic view for describing a control flow of the zone free-type induction heating device of FIG. 1.

For reference, FIG. 2 is a diagram from which a cover plate 119 of FIG. 1 is omitted, for convenience of description.

Referring to FIGS. 1 to 3, an induction heating device 1 in accordance with the embodiment of the present disclosure may include a case 125, the cover plate 119, an input interface 300, a first control module 310, a second control module 320, a temperature sensor 330, a plurality of working coils WC and the like.

For reference, although not illustrated in the drawings, various parts constituting the induction heating device 1 as well as the plurality of working coils WC may be installed in the case 125, the various parts including a base plate in which the working coils WC are installed, an indicator substrate support part on which an indicator substrate is installed, a plurality of light emitting elements installed on the indicator substrate, the indicator substrate configured to control the plurality of light emitting elements, a light guide configured to display light emitted from the light emitting elements through a light emitting surface, and a blowing fan for cooling heat generated by the working coils WC or the plurality of light emitting elements.

Furthermore, various devices related to the operations of the working coils WC may be installed in the case 125, but the detailed descriptions thereof will be omitted herein. The various devices include a power supply unit configured to provide AC power, a rectifier unit configured to rectify the AC power of the power supply unit into DC power, an inverter unit configured to convert the DC power rectified by the rectifier unit into a resonance current through a switching operation, and provide the resonance current to the working coils WC, the second control module 320 configured to control the inverter unit and parts related to the operation of the inverter unit, and a relay or semiconductor switch configured to turn on or off the working coils WC.

The case 125 may be insulated to prevent heat, generated by the working coils WC, from leaking to the outside.

The cover plate 119 may be coupled to the top of the case 125, and shield the inside of the case 125, and an item to be heated (not illustrated), i.e. an object heated by one or more of the plurality of working coils WC, may be disposed on the top surface of the cover plate 119.

Specifically, the cover plate 119 may include an upper plate 115 on which an item to be heated, such as a cooking vessel, is put, and heat generated by the working coils WC may be transferred to the item to be heated through the upper plate 115.

The upper plate 115 may be made of a glass material, for example, and the input interface 300 may be installed on the upper plate 115, the input interface 300 serving to receive an input from a user and transfer the corresponding input to the first control module 310. The first control module 310 is a control unit for controlling the input interface 300.

The input interface 300 may be flatly buried in the top surface of the cover plate 119, i.e. the upper plate 115, or flatly installed on the same plane as the upper plate 115, and serve to display a specific image. Furthermore, the input interface 300 may receive a touch input from a user, and provide the received touch input to the first control module 310.

Specifically, the input interface 300 may be a module through which a user inputs a desired heat power or heating time, and may be implemented as various parts such as a physical button and a touch panel. Furthermore, the input interface 300 may also include a display panel configured to display the driving state of the induction heating device 1.

For reference, the input interface 300 may transfer an input received from the user to the first control module 310, and the first control module 310 may transfer the input to the second control module 320. This configuration will be described below in detail.

The temperature sensor 330 may sense the temperature of the cover plate 119.

Specifically, the temperature sensor 330 may sense the temperature of the cover plate 119, and provide the first control module 310 with information on the sensed temperature of the cover plate 119.

The first control module 310 may receive information on the temperature of the cover plate 119 from the temperature sensor 330, and determine whether to control the input interface 300 to display a remaining heat image based on the received information on the temperature of the cover plate 119.

Specifically, the first control module 310 may control the operation of the input interface 300. That is, the input interface 300 may display a specific image according to a control command of the first control module 310.

Furthermore, the first control module 310 may receive a touch input of a user from the input interface 300, and transfer the received touch input to the second control module 320 or control or select a specific image displayed on the input interface 300 based on the received touch input.

The first control module 310 may receive information on the position of an item to be heated from the second control module 320, and control or select a specific image displayed on the input interface 300 based on the received information on the position of the item to be heated.

The second control module 320 may be a control unit for controlling the operations of the plurality of working coils WC, and may sense on which working coil WC of the plurality of working coils WC the item to be heated is located.

Specifically, the second control module 320 may control the inverter unit and the parts related to the operation of the inverter unit as described above, and thus control the operations of the plurality of working coils WC. Furthermore, the second control module 320 may provide the first control module 310 with the information on the sensed position of the item to be heated, and receive a touch input of a user from the first control module 310.

The second control module 320 may control the operations of the plurality of working coils WC based on the user's touch input received from the first control module 310.

The plurality of working coils WC may be heating units for heating an item, and may be installed in the case 125.

Specifically, the operations of the plurality of working coils WC may be controlled by the second control module 320. That is, as illustrated in FIG. 2, the plurality of working coils WC may be arranged so as to be spaced by a predetermined distance apart from each other.

For convenience of description, however, one working coil WC will be taken as an example for description.

Specifically, the working coil WC may be implemented as a conducting wire which is wound a plurality of times in a ring shape, and generate an AC magnetic field. Furthermore, under the working coil WC, a MICA sheet and a ferrite core may be sequentially arranged.

Furthermore, the ferrite core may be fixed to the MICA sheet through a sealant, and serve to diffuse an AC magnetic field generated by the working coil WC.

The MICA sheet may be fixed to the working coil WC and the ferrite core through a sealant, and prevent heat, generated by the working coil WC, from being directly transferred to the ferrite core.

The induction heating device 1 in accordance with the embodiment of the present disclosure may also have a wireless power transmission function based on the above-described configuration and features.

That is, a technology for wirelessly supplying power has been recently developed and applied to a lot of electronic devices. An electronic device to which the wireless power transmission technology is applied has a battery that is charged through an operation of simply putting the electronic device on a charging pad, even though the electronic device is not connected to a separate charging connector. Since the electronic device to which the wireless power transmission technology is applied needs no wired cord or charger, the portability thereof is improved, and the size and weight thereof are reduced further than in the related art.

Examples of the wireless power transmission technology include an electromagnetic induction method using a coil, a resonance method using resonance, and a wave radiation method that convert electrical energy into micro waves and transfers the micro waves. Among the wireless power transmission technologies, the electromagnetic induction method is a technology for transmitting power by using electromagnetic induction between a primary coil (e.g. working coil) installed on a device for wirelessly transmitting power and a secondary coil installed on a device for wirelessly receiving power.

The principle of the induction heating method of the induction heating device 1 is substantially the same as that of the wireless power transmission technology based on electromagnetic induction in that an item is heated by electromagnetic induction.

Therefore, the induction heating device 1 in accordance with the embodiment of the present disclosure may have the wireless power transmission function as well as the induction heating function. Furthermore, since a induction heating mode or a wireless power transmission mode can be controlled by the first control module 310, the induction heating function or the wireless power transmission function may be selectively used, if necessary.

As such, the induction heating device 1 in accordance with the embodiment of the present disclosure has the above-described configuration and features. Hereafter, a heat power adjusting method of the induction heating device 1 will be described.

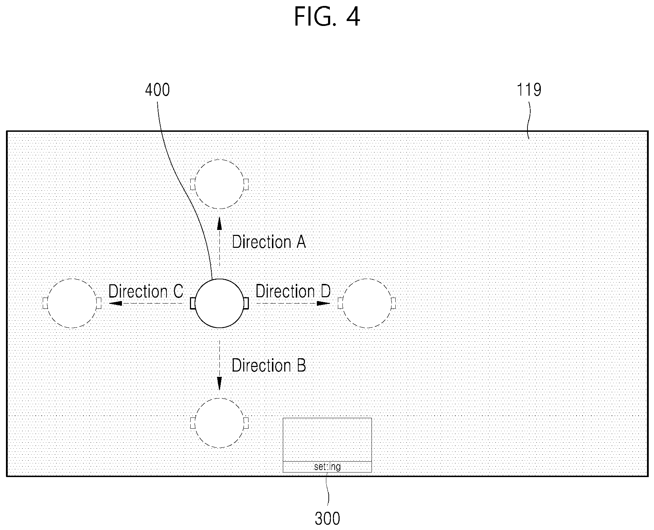

FIG. 4 is a diagram illustrating a situation in which an item 400 to be heated is slid on the top surface of the induction heating device 1 in accordance with the embodiment of the present disclosure.

In this case, the item 400 (e.g. pot) is located at a first position on the top surface of the cover plate 119, and heated by at least one working coil WC disposed at the first position. Then, the heated item 400 is slid in any one direction of directions A, B, C, and D by a user's gesture (operation).

The directions A and B are vertical directions, and the direction A (upward direction) is opposite to the direction B (downward direction). Furthermore, the directions C and D are horizontal directions, and the direction C (leftward direction) is opposite to the direction D (rightward direction).

In accordance with the embodiment of the present disclosure, when the item 400 is slid in any one direction of the vertical and horizontal directions, i.e. a first direction, the second control module 320 may adjust the heat power by at least one working coil WC disposed in the first direction.

Furthermore, in accordance with the embodiment of the present disclosure, when the item 400 is slid in the other direction of the vertical and horizontal directions, i.e. a second direction, at least one of the first and second control modules 310 and 320 may control at least one of the input interface 300 and at least one working coil WC disposed in the second direction in order to provide an additional function.

The additional function is different from a main function of providing heat power through the working coil WC. Examples of the additional function may include a child lock function, a timer function and the like. However, the present disclosure is not limited thereto, and various additional functions may be provided to the user through an operation which will be described below.

Furthermore, the second control module 320 may measure how much a resonance current flowing through the working coil WC is attenuated, and determine whether the item 400 was slid. That is, whether the item 400 is lifted may be sensed through a non-contact sensing signal of the working coil WC.

For convenience of description, the first direction is defined as the vertical direction, the second direction is defined as the horizontal direction, the direction A is defined as the upward direction, the direction B is defined as the downward direction, the direction C is defined as the leftward direction, and the direction D is defined as the rightward direction. However, the preset disclosure is not limited thereto.

Hereafter, the operation of the induction heating device 1 will be described in more detail with reference to the following drawings.

### 1. Situation in which the heated item 400 is slid in the vertical direction on the top surface of the cover plate 119

When the item 400 heated at the first position is slid in any one direction (i.e. first-first direction) of the upward direction and the downward direction, the second control module 320 may increase or maintain heat power by at least one working coil WC disposed in the first-first direction from the first position.

Furthermore, when the item 400 heated at the first position is slid in the other direction (i.e. first-second direction) of the upward direction and the downward direction, the second control module 320 may decrease or maintain the heat power by at least one working coil WC disposed in the first-second direction from the first position.

At this time, first heat power by at least one working coil WC disposed at the first position and the distance by which the heated item 400 is slid from the first position may be used in order to set the heat power by the working coil WC.

For convenience of description, it is assumed that the first-first direction is the upward direction, and the first-second direction is the downward direction. However, the preset disclosure is not limited thereto.

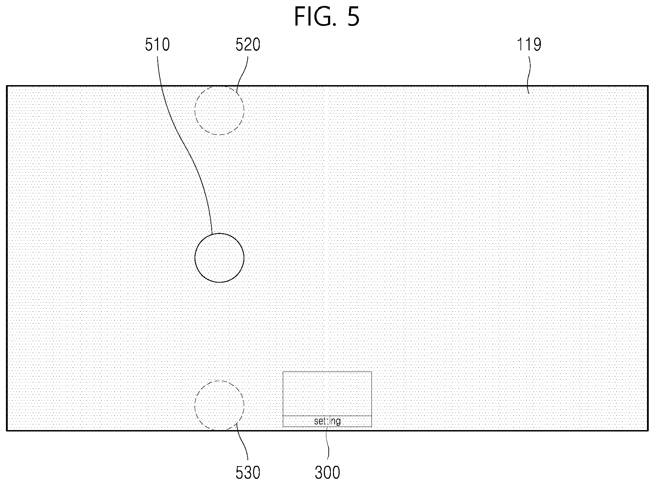

FIGS. 5 to 8 are diagrams for describing the concept of the operation of adjusting heat power by the working coil WC when the heated item 400 is slid in the vertical direction, in accordance with the embodiment of the present disclosure.

Referring to FIG. 5, an end position 520 in the upward direction has the same horizontal-axis coordinate as a first position 510, and indicates a position abutting on the upper edge of the top surface of the cover plate 119. Furthermore, an end position 530 in the downward direction has the same horizontal-axis coordinate as the first position 510, and indicates a position abutting on the lower edge of the top surface of the cover plate 119.

The detailed contents of the configuration for setting heat power by the working coil WC will be described as follows.

In accordance with the embodiment of the present disclosure, when first heat power of the first position 510 is smaller than a default maximum heat power by the working coil WC, the second control module 320 may set, to the default maximum heat power, heat power by at least one working coil WC disposed at the end position 520 in the upward direction, and sequentially increase the heat power by at least one working coil WC, disposed between the first position 510 and the end position 520 in the upward direction, in proportion to a sliding distance.

At this time, the heat power by at least one working coil WC disposed between the first position 510 and the end position 520 in the upward direction is larger than the first heat power and smaller than the default maximum heat power. The default maximum heat power is a preset value.

In accordance with the embodiment of the present disclosure, when the first heat power of the first position 510 is larger than a default minimum heat power by the working coil WC, the second control module 320 may set, to the default minimum heat power, heat power by at least one working coil WC disposed at the end position 530 in the downward direction, and sequentially decrease the heat power by at least one working coil WC, disposed between the first position 510 and the end position 530 in the downward direction, in proportion to a sliding distance.

At this time, the heat power by at least one working coil WC disposed between the first position 510 and the end position 530 in the downward direction is larger than the default minimum heat power and smaller than the first heat power. The default minimum heat power is a preset value.

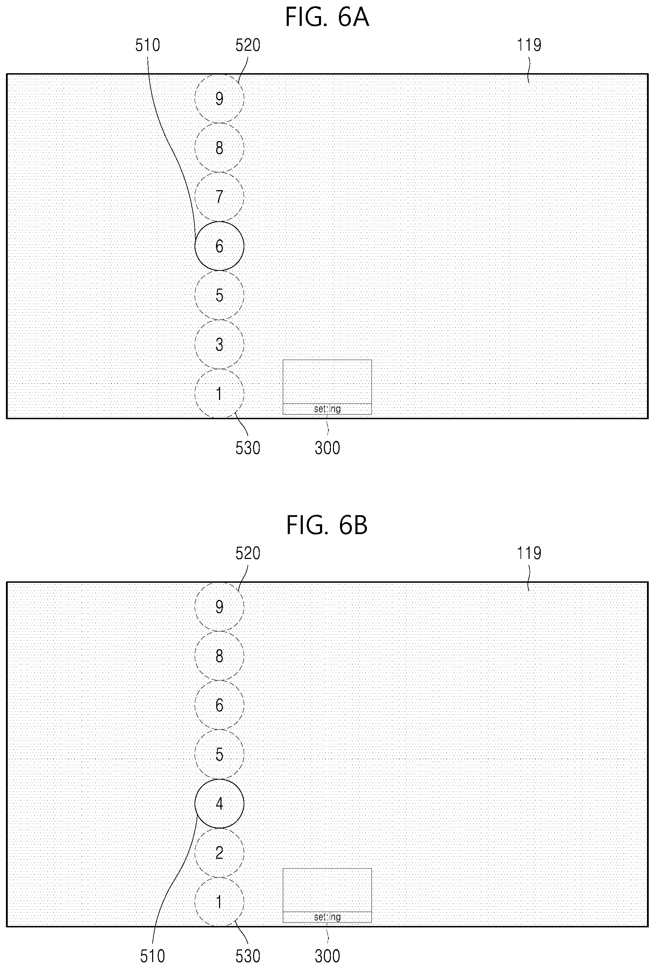

For example, FIG. 6A is based on the assumption that the first heat power of the first position 510 at which the item 400 to be heated is disposed is "6", the default maximum heat power is set to "9", and the default minimum heat power is set to "1".

In this case, the second control module 320 sets, to the default maximum heat power of "9", the heat power by at least one working coil WC disposed at the end position 520 in the upward direction. Furthermore, the second control module 320 sequentially increases the heat power by at least one working coil WC, disposed between the first position 510 and the end position 520 in the upward direction, in proportion to a sliding distance. For example, the second control module 320 increases the heat power from "7" to "8".

Furthermore, the second control module 320 sets, to the default minimum heat power of "1", the heat power by at least one working coil WC disposed at the end position 530 in the downward direction. Furthermore, the second control module 320 sequentially decreases the heat power by at least one working coil WC, disposed between the first position 510 and the end position 530 in the downward direction, in proportion to a sliding distance. For example, the second control module 320 decreases the heat power from "5" to "3".

For another example, FIG. 6B is based on the assumption that the first heat power of the first position 510 at which the heated item 400 is disposed is "4", the default maximum heat power is set to "9", and the default minimum heat power is set to "1".

In this case, the second control module 320 sets, to the default maximum heat power of "9", the heat power by at least one working coil WC disposed at the end position 520 in the upward direction. Furthermore, the second control module 320 sequentially increases the heat power by at least one working coil WC, disposed between the first position 510 and the end position 520 in the upward direction, in proportion to a sliding distance. For example, the second control module 320 sequentially increases the heat power from "5" to "6", and "6" to "8".

Furthermore, the second control module 320 sets, to the default minimum heat power of "1", the heat power by at least one working coil WC disposed at the end position 530 in the downward direction. Furthermore, the second control module 320 sequentially decreases the heat power by at least one working coil WC, disposed between the first position 510 and the end position 530 in the downward direction, in proportion to a sliding distance. For example, the second control module 320 sets the heat power to "2".

In some cases, the first heat power of the first position 510 at which the heated item 400 is disposed may be equal to the default maximum heat power. In this case, the second control module 320 may set, to the default maximum heat power, the heat power by at least one working coil WC disposed in the upward direction from the first position 510. Even in this case, the second control module 320 may sequentially decrease the heat power by at least one working coil WC, disposed in the downward direction from the first position 510, in proportion to a sliding distance.

Furthermore, in some cases, the first heat power of the first position 510 at which the heated item 400 is disposed may be equal to the default minimum heat power. In this case, the second control module 320 may set, to the default minimum heat power, the heat power by at least one working coil WC disposed in the downward direction from the first position 510. Even in this case, the second control module 320 may sequentially increase the heat power by at least one working coil WC, disposed in the upward direction from the first position 510, in proportion to a sliding distance.

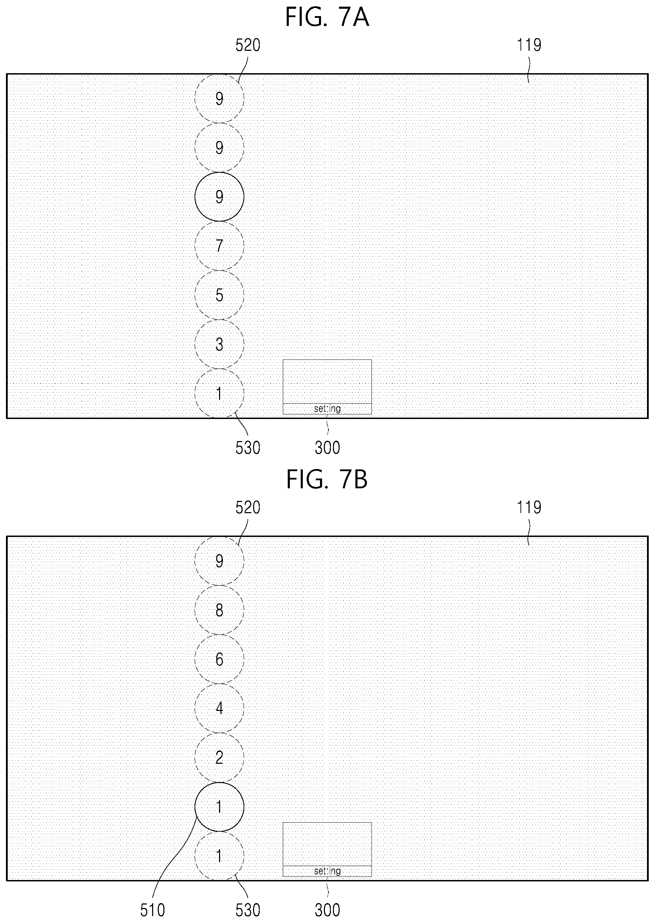

For example, FIG. 7A is based on the assumption that the first heat power of the first position 510 at which the heated item 400 is disposed is "9", the default maximum heat power is set to "9", and the default minimum heat power is set to "1".

In this case, the second control module 320 sets, to the default maximum heat power of "9", the heat power by at least one working coil WC disposed in the upward direction from the first position 510. Furthermore, the second control module 320 sets, to the default minimum heat power of "1", the heat power by at least one working coil WC disposed at the end position 530 in the downward direction, and sequentially decreases the heat power by at least one working coil WC, disposed between the first position 510 and the end position 530 in the downward direction, in proportion to sliding distance.

For another example, FIG. 7B is based on the assumption that the first heat power of the first position 510 at which the item 400 to be heated is disposed is "1", the default maximum heat power is set to "9", and the default minimum heat power is set to "1".

In this case, the second control module 320 sets, to the default minimum heat power of "1", the heat power by at least one working coil WC disposed in the downward direction from the first position 510. Furthermore, the second control module 320 sets, to the default maximum heat power of "9", the heat power by at least one working coil WC disposed at the end position 520 in the upward direction, and sequentially increases the heat power by at least one working coil WC, disposed between the first position 510 and the end position 520 in the upward direction, in proportion to a sliding distance.

In some cases, the first position 510 at which the heated item 400 is disposed may be the end position 520 in the upward direction, the heat power of the first position 510 at which the heated item 400 is disposed may be the default minimum heat power, and the heated item 400 may be slid in the downward direction.

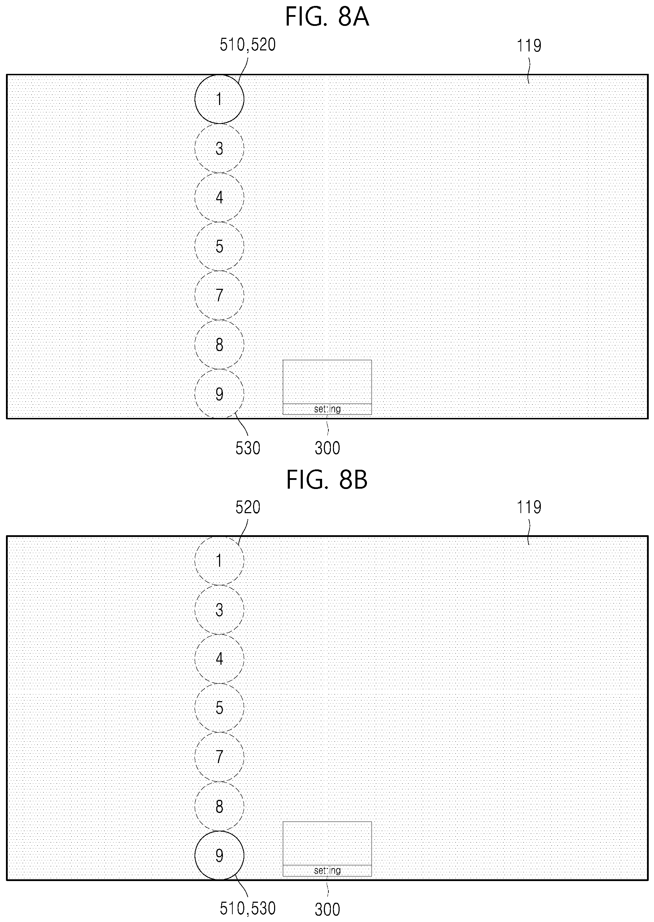

In this case, the second control module 320 may change the heat power adjustment setting. In the above-described situation, the second control module 320 may change the setting to increase the heat power of the heating unit, disposed in the downward direction from the first position 510, in proportion to a sliding distance. This process is illustrated in FIG. 8A.

Furthermore, in some cases, the first position 510 at which the heated item 400 is disposed may be the end position 530 in the downward direction, the heat power of the first position 510 at which the heated item 400 is disposed may be the default maximum heat power, and the item 400 to be heated may be slid in the upward direction.

In this case, the second control module 320 may change the heat power adjustment setting. In the above-described situation, the second control module 320 may change the setting to decrease the heat power of the heating unit, disposed in the upward direction from the first position 510, in proportion to a sliding distance. This process is illustrated in FIG. 8B.

When the heat power is changed by the sliding, the heat power change may be displayed on the input interface 300.

In short, the item 400 to be heated may be heated by the working coil WC disposed at the first position of the cover plate 119. When the heating continues for a long time, an emergency situation in which content (e.g. soup) contained in the heated item 400 boils over may occur. Therefore, a user may reduce the heat power at the first position, or lift the heated item 400 from the cover plate 119 and cool down the heated item 400.

At this time, when the user uses both hands to move the heated item 400, the user may not adjust the heat power of the working coil WC, and needs to place the heated item 400 at another position, and then adjust the heat power of the working coil WC. Therefore, the user feels inconvenient when adjusting the heat power.

Alternatively, when the user uses one hand to grasp the heated item 400 and adjusts the heat power of the working coil WC with the other hand, the user may not rapidly adjust the heat power due to the inconvenience of a touch operation, even though the user can adjust the heat power.

Therefore, the present disclosure aims at rapidly and conveniently adjusting the heat power of the induction heating device 1 without user intervention, when an emergency situation occurs. To this end, when the user makes a gesture to slide the heated item 400 in the vertical direction, the induction heating device 1 in accordance with the embodiment of the present disclosure may decrease the heat power of the working coil WC based on a sliding distance.

In accordance with another embodiment of the present disclosure, when the heated item 400 is slid in the vertical direction on the top surface of the cover plate 119, the heat power by at least one working coil WC disposed in the vertical direction is not automatically adjusted, but the first control module 310 may generate a guidance message for adjusting the heat power by at least one working coil WC disposed in the vertical direction.

In this case, the induction heating device 1 may include a speaker (not illustrated) and a microphone (not illustrated) which are disposed on the top surface of the cover plate 119, and the generated guidance message may be outputted as a voice signal, or displayed as a specific image on the input interface 300.

For example, when the heated item 400 is slid in the vertical direction and the first heat power is "3", the first control module 310 may generate a guidance message saying "Would you set the heat power to 6?", based on the first heat power at the first position and the sliding distance. The guidance message is outputted to the speaker (not illustrated) or the input interface 300. In this case, the user may input a voice command signal, or touch the input interface 300 to respond to the guidance message.

For another example, when the heated item 400 is slid in the vertical direction, the first control module 310 may generate a guidance message saying "Which level do you set heat power to?". The guidance message is outputted to the speaker (not illustrated) or the input interface 300. In this case, the user may input a voice command signal, or touch the input interface 300 to respond to the guidance message.

### 2. Situation in which the heated item 400 is slid in the horizontal direction on the top surface of the cover plate 119

When the item 400 heated at the first position is slid in the horizontal direction, the control unit composed of the first and second control modules 310 and 320 may control at least one of the input interface 300 and at least one working coil WC disposed in the horizontal direction, in order to provide an additional function.

Examples of the additional function may include a child lock function, a timer function and the like. However, the preset disclosure is not limited thereto. In order to provide the additional function, the distance by which the item 400 is slid from the first position may be used.

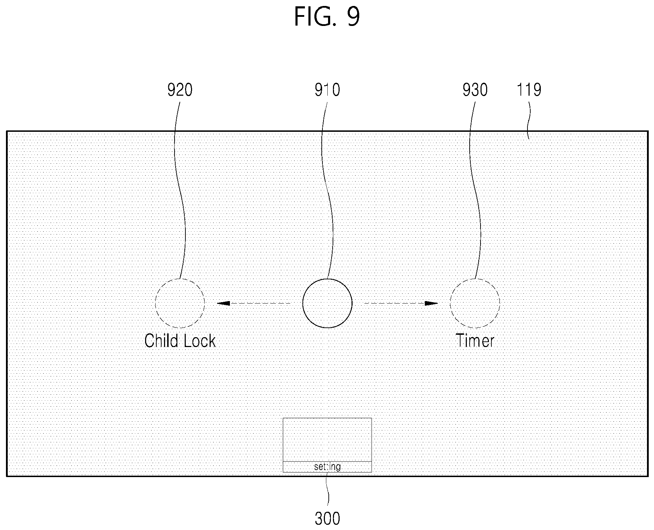

FIGS. 9 to 11 are diagrams for describing the concept of an operation of the induction heating device 1 to provide an additional function when the item 400 is slid in the horizontal direction, in accordance with the embodiment of the present disclosure.

Referring to FIG. 9, when the item 400 is slid to a second position 920 spaced by a first distance apart from a first position 910 in the horizontal direction, the control unit may provide a first additional function.

For example, the second position 920 may be spaced by the first distance apart from the first position 910 to the left. The first additional function may be the child lock function.

The child lock function indicates a function of setting the input interface 300 to a lock state while heat power at the second position 920 is fixed to the first heat power. The lock state indicates that a physical button or virtual button displayed on the input interface 300 is not manipulated even when a user's touch is inputted.

That is, when the user slides the item 400, located at the first position 910, to the second position 920 spaced by the first distance apart from the first position 910 to the left, the second control module 320 may set the heat power of the second position 920 to the same heat power as the first heat power of the first position 910, and the first control module 310 may set the input interface 300 to a lock state.

FIG. 9 illustrates that the first additional function is provided when the item 400 is slid by the first distance to the left, but the present disclosure is not limited thereto. That is, when the item 400 is slid by the first distance to the right, the first additional function may be provided. In this case, the second position 920 may not overlap a third position 930 which is present in the rightward direction and will be described below.

Referring to FIG. 9, when the item 400 is slid to the third position 930 spaced by a second distance apart from the first position 910 in the horizontal direction, the control unit may provide a second additional function.

For example, the third position 930 may be spaced by the second distance apart from the first position 910 to the right. The second additional function may be a timer function.

The timer function may indicate a function of maintaining the first heat power for a specific time while the heat power of the third position 930 is fixed to the first heat power, and then turning off the heat power of the third position 930.

That is, when the user slides the item 400, located at the first position 910, to the third position 930 that is spaced by the second distance apart from the first position 910 to the right, the second control module 320 may set the heat power of the third position 930 to the same heat power as the first heat power of the first position 910, and maintain the heat power of the third position 930 for a specific time and then turn off the heat power of the third position 930 after the specific time has elapsed. At this time, the first control module 310 may display, on the input interface 300, the specific time and the real time after the specific time has elapsed.

FIG. 9 illustrates that the second additional function is provided when the item 400 is slid by the second distance to the right, but the present disclosure is not limited thereto. That is, when the item 400 is slid by the second distance to the left, the second additional function may be provided. In this case, the third position 930 may not overlap the second position 920.

In accordance with the embodiment of the present disclosure, the control unit may set the time of the timer in proportion to the distance by which the item 400 is slid in the second direction. That is, when the item 400 is slid by a long distance, the setting time of the timer may have a large time value, and when the item 400 is slid by a short distance, the setting time of the timer may have a small time value.

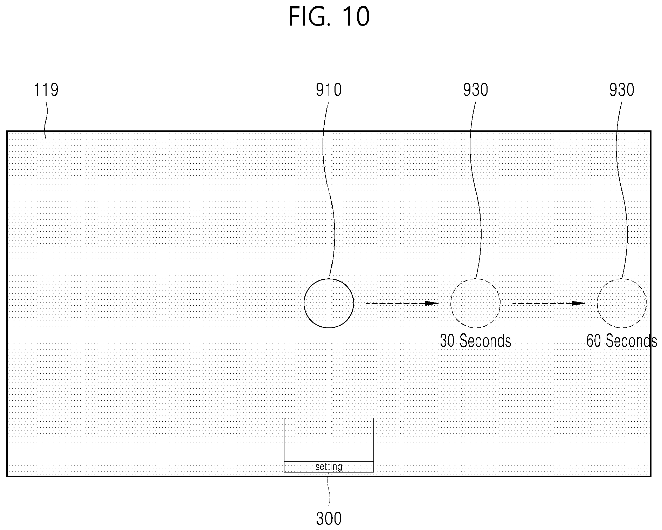

FIG. 10 illustrates an example in which the timer function is set in accordance with the embodiment of the present disclosure.

Referring to FIG. 10, when the item 400 is moved by 0.1 m, the time of the timer may be set to 30 seconds, and when the item 400 is moved by 0.2 m, the time of the timer may be set to 60 seconds.

When the time of the timer is set by the sliding, the user may request a longer time for the timer in some cases. In the example of FIG. 10, the user may request 120 seconds for the timer.

In order to solve such a situation, when the item 400 is slid and located at an end position in the rightward direction, i.e. the third position 930, and then relocated at the third position 930 within a preset time (very short time), the control unit controls the input interface 300 to display a first image for setting the time of the timer.

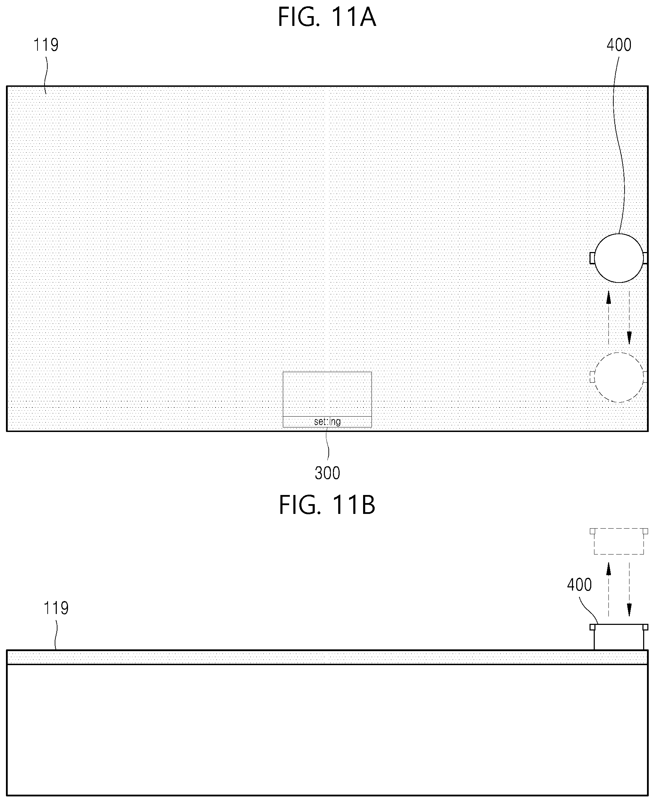

The situation in which the item 400 is relocated is illustrated in FIGS. 11A and 11B. FIG. 11A shows that the item 400 located at the third position 930 may be slid in the vertical direction and then relocated at the third position 930 within the preset time, and FIG. 11B shows that the item 400 located at the third position 930 may be lifted and then relocated at the third position 930 within the preset time.

At this time, when the item 400 is relocated at the third position 930, the control unit may control the input interface 300 to display a second image that displays the time of the timer, and when the input interface 300 receives, from the user, a touch input for changing the time of the timer, the control unit may set the time of the timer based on the touch input.

In short, when the item 400 is slid in the horizontal direction, the induction heating device 1 may provide an additional function which is different from the main function of providing heat power. Therefore, the convenience of a user who uses the induction heating device 1 is increased.

## Claims

1. An electric range comprising:
a case (125);
a plurality of heating units arranged in the case (125), and disposed at a plurality of regions so as to be spaced apart from each other;
a cover plate (119) coupled to the top of the case (125);
an input interface (300) disposed on a top surface of the cover plate (119), and configured to display a specific image; and
a control unit configured to control the heating units and the input interface (300),
wherein an item (400) to be heated is located at a first position (510) on the top surface of the cover plate (119), and heated by the heating unit disposed at the first position (510),
wherein when the heated item (400) is slid in any one direction of a vertical direction and a horizontal direction on the top surface of the cover plate (119), the control unit controls at least one of the input interface (300) and the heating unit disposed in the any one direction in order to provide an additional function,
wherein the additional function is a different function from a main function of the heating unit to provide heat power, and
wherein the additional function comprises a first additional function and a second additional function,
wherein when the heated item (400) is slid to a second position (920) spaced by a first distance from the first position (510) in the second direction, the control unit provides the first additional function, and **characterized in that**
when the heated item (400) is slid to a third position (930) spaced by a second distance from the first position (510) in the second direction, the control unit provides the second additional function,
wherein the second position (920) does not overlap the third position (930).

2. The electric range of claim 1, wherein the first additional function is a lock function of setting the input interface (300) to a lock state while the heat power of the second position (920) is fixed to the first heat power, when the heated item (400) is slid in the second direction, and
the second additional function is a timer function of maintaining the first heat power for a specific time while the heat power of the third position (930) is fixed to the first heat power, and then turning off the first heat power, when the heated item (400) is slid in the second direction.

3. The electric range of claim 1,
wherein when the heated item (400) is slid in a first direction of a vertical direction and a horizontal direction on the top surface of the cover plate (119), the control unit adjusts heat power of the heating unit disposed in the first direction, and
when the heated item (400) is slid in a second direction of the vertical and horizontal directions, the control unit controls at least one of the input interface (300) and the heating unit disposed in the second direction in order to provide the additional function,
wherein when the heated item (400) is slid to a second position (920) spaced by a first distance from the first position (510) in the second direction, the control unit provides the first additional function, and
when the heated item (400) is slid to a third position (930) spaced by a second distance from the first position (510) in the second direction, the control unit provides the second additional function,
wherein the second position (920) does not overlap the third position (930).

4. The electric range of claim 3, wherein the first direction comprises a first-first direction and a first-second direction, and the first-first direction is opposite to the first-second direction,
wherein when the heated item (400) is slid in the first-first direction, the control unit increases or maintain heat power of the heating unit disposed in the first-first direction from the first position (510), and
when the heated item (400) is slid in the first-second direction, the control unit decreases or maintains heat power of the heating unit disposed in the first-second direction from the first position (510).

5. The electric range of claim 4, wherein when the first heat power is smaller than a default maximum heat power, the control unit sets the heat power of the heating unit, disposed at an end position (520) in the first-first direction, to the default maximum heat power, and sequentially increases the heat powers of the heating units, disposed between the first position (510) and the end position (520) in the first-first direction, in proportion to a sidling distance, and
when the first heat power is equal to the default maximum heat power, the control unit sets the heat power of the heating unit disposed in the first-first direction to the default maximum heat power.

6. The electric range of claim 4, wherein when the first heat power is larger than a default minimum heat power, the control unit sets the heat power of the heating unit, disposed at an end position (530) in the first-second direction, to the default minimum heat power, and sequentially decreases the heat powers of the heating units, disposed between the first position (510) and the end position (530) in the first-second direction, in proportion to a sidling distance, and
when the first heat power is equal to the default minimum heat power, the control unit sets the heat power of the heating unit, disposed in the first-second direction, to the default minimum heat power.

7. The electric range of claim 4, wherein when the first position (510) is the end position (520) in the first-first direction, the first heat power is the default minimum heat power, and the heated item (400) is slid in the first-second direction, the control unit changes the setting to increase the heat power of the heating unit, disposed in the first-second direction, in proportion to a sliding distance.

8. The electric range of claim 4, wherein when the first position (510) is the end position (530) in the first-second direction, the first heat power is the default maximum heat power, and the heated item (400) is slid in the first-first direction, the control unit changes the setting to decrease the heat power of the heating unit, disposed in the first-first direction, in proportion to a sliding distance.

9. The electric range of claim 3, wherein the first additional function is a lock function of setting the input interface (300) to a lock state while the heat power of the second position (920) is fixed to the first heat power, when the heated item (400) is slid in the second direction, and
the second additional function is a timer function of maintaining the first heat power for a specific time while the heat power of the third position (930) is fixed to the first heat power, and then turning off the first heat power, when the heated item (400) is slid in the second direction.

10. The electric range of claim 3, wherein the additional function is a timer function,
wherein the control unit sets the time of the timer in proportion to the distance by which the heated item (400) is slid in the second direction.

11. The electric range of claim 10, wherein when the heated item (400) is slid and located at an end position (530) in the second direction and then relocated at the end position (530) in the second direction within a preset time, the control unit controls the input interface (300) to display a first image for setting the time of the timer.

12. The electric range of claim 11, wherein when the heated item (400) is slid in the first direction and then relocated at the end position (530) in the second direction within the preset time, the control unit controls the input interface (300) to display the first image.

13. The electric range of claim 11, wherein when the heated item (400) is lifted and then relocated at the end position (530) in the second direction within the preset time, the control unit controls the input interface (300) to display the first image.

14. The electric range of claim 3, wherein the heating unit is a working coil, and
the control unit measures how much a resonance current flowing through the working coil is attenuated, in order to determine whether the heated item (400) was slid.

15. The electric range of claim 3, wherein the electric range further comprises:
a speaker disposed on the top surface of the cover plate (119); and
a microphone disposed on the top surface of the cover plate (119);
wherein when the heated item (400) is slid in a first direction of a vertical direction and a horizontal direction on the top surface of the cover plate (119), the control unit controls the speaker to output a guidance message for adjusting heat powers of two or more heating units disposed in the first direction, or controls the input interface (300) to display a third image corresponding to the guidance message.

## Patentansprüche

1. Elektroherd, aufweisend:
ein Gehäuse (125);
mehrere Heizeinheiten, die in dem Gehäuse (125) angeordnet sind und an mehreren Bereichen derart angeordnet sind, dass sie voneinander beabstandet sind;
eine Abdeckplatte (119), die mit der Oberseite des Gehäuses (125) gekoppelt ist;
eine Eingabeschnittstelle (300), die auf einer Oberseite der Abdeckplatte (119) angeordnet ist und dazu konfiguriert ist, ein spezifisches Bild anzuzeigen; und
eine Steuereinheit, die dazu konfiguriert ist, die Heizeinheiten und die Eingabeschnittstelle (300) zu steuern, wobei ein zu erhitzender Gegenstand (400) an einer ersten Position (510) auf der Oberseite der Abdeckplatte (119) angeordnet ist und durch die an der ersten Position (510) angeordnete Heizeinheit erhitzt wird,
wobei, wenn der erhitzte Gegenstand (400) in eine vertikale Richtung oder eine horizontale Richtung auf der Oberseite der Abdeckplatte (119) verschoben wird, die Steuereinheit zumindest eine der Eingabeschnittstelle (300) und der in der Richtung angeordneten Heizeinheit steuert, um eine Zusatzfunktion bereitzustellen,
wobei die Zusatzfunktion eine andere Funktion als eine Hauptfunktion der Heizeinheit ist, Heizleistung bereitzustellen, und
wobei die Zusatzfunktion eine erste Zusatzfunktion und eine zweite Zusatzfunktion aufweist,
wobei, wenn der erhitzte Gegenstand (400) zu einer zweiten Position (920) verschoben wird, die um eine erste Entfernung von der ersten Position (510) in der zweiten Richtung beabstandet ist, die Steuereinheit die erste Zusatzfunktion bereitstellt, und
**dadurch gekennzeichnet, dass**
wenn der erhitzte Gegenstand (400) zu einer dritten Position (930) verschoben wird, die um eine zweite Entfernung von der ersten Position (510) in der zweiten Richtung beabstandet ist, die Steuereinheit die zweite Zusatzfunktion bereitstellt,
wobei die zweite Position (920) die dritte Position (930) nicht überlappt.

2. Elektroherd nach Anspruch 1, wobei die erste Zusatzfunktion eine Sperrfunktion ist, bei der die Eingabeschnittstelle (300) in einen Sperrzustand gesetzt wird, während die Heizleistung der zweiten Position (920) auf die erste Heizleistung festgelegt ist, wenn der erhitzte Gegenstand (400) in der zweiten Richtung verschoben wird, und
die zweite Zusatzfunktion eine Timerfunktion ist, bei der die erste Heizleistung für eine spezifische Zeit beibehalten wird, während die Heizleistung der dritten Position (930) auf die erste Heizleistung festgelegt ist, und anschließend die erste Heizleistung ausgeschaltet wird, wenn der erhitzte Gegenstand (400) in der zweiten Richtung verschoben wird.

3. Elektroherd nach Anspruch 1,
wobei, wenn der erhitzte Gegenstand (400) in einer ersten Richtung einer vertikalen Richtung und einer horizontalen Richtung auf der Oberseite der Abdeckplatte (119) verschoben wird, die Steuereinheit die Heizleistung der in der ersten Richtung angeordneten Heizeinheit anpasst, und
wenn der erhitzte Gegenstand (400) in einer zweiten Richtung der vertikalen und horizontalen Richtungen verschoben wird, die Steuereinheit zumindest eine der Eingabeschnittstelle (300) und der in der zweiten Richtung angeordneten Heizeinheit steuert, um die Zusatzfunktion bereitzustellen,
wobei, wenn der erhitzte Gegenstand (400) zu einer zweiten Position (920) verschoben wird, die um eine erste Entfernung von der ersten Position (510) in der zweiten Richtung beabstandet ist, die Steuereinheit die erste Zusatzfunktion bereitstellt, und
wenn der erhitzte Gegenstand (400) zu einer dritten Position (930) verschoben wird, die um eine zweite Entfernung von der ersten Position (510) in der zweiten Richtung beabstandet ist, die Steuereinheit die zweite Zusatzfunktion bereitstellt,
wobei die zweite Position (920) die dritte Position (930) nicht überlappt.

4. Elektroherd nach Anspruch 3, wobei die erste Richtung eine erste-Erst-Richtung und eine erste-Zweit-Richtung aufweist, und die erste-Erst-Richtung der ersten-Zweit-Richtung entgegengesetzt ist,
wobei, wenn der erhitzte Gegenstand (400) in der ersten-Erst-Richtung verschoben wird, die Steuereinheit die Heizleistung der in der ersten-Erst-Richtung von der ersten Position (510) angeordneten Heizeinheit erhöht oder beibehält, und
wenn der erhitzte Gegenstand (400) in der ersten-Zweit-Richtung verschoben wird, die Steuereinheit die Heizleistung der in der ersten-Zweit-Richtung von der ersten Position (510) angeordneten Heizeinheit verringert oder beibehält.

5. Elektroherd nach Anspruch 4, wobei, wenn die erste Heizleistung kleiner als eine vorgegebene maximale Heizleistung ist, die Steuereinheit die Heizleistung der an einer Endposition (520) in der ersten-Erst-Richtung angeordneten Heizeinheit auf die vorgegebene maximale Heizleistung setzt und die Heizleistungen der zwischen der ersten Position (510) und der Endposition (520) in der ersten-Erst-Richtung angeordneten Heizeinheiten proportional zu einem Verschiebeabstand sequentiell erhöht, und
wenn die erste Heizleistung gleich der vorgegebenen maximalen Heizleistung ist, die Steuereinheit die Heizleistung der in der ersten-Erst-Richtung angeordneten Heizeinheit auf die vorgegebene maximale Heizleistung setzt.

6. Elektroherd nach Anspruch 4, wobei, wenn die erste Heizleistung größer als eine vorgegebene minimale Heizleistung ist, die Steuereinheit die Heizleistung der an einer Endposition (530) in der ersten-Zweit-Richtung angeordneten Heizeinheit auf die vorgegebene minimale Heizleistung setzt und die Heizleistungen der zwischen der ersten Position (510) und der Endposition (530) in der ersten-Zweit-Richtung angeordneten Heizeinheiten proportional zu einem Verschiebeabstand sequentiell verringert, und
wenn die erste Heizleistung gleich der vorgegebenen minimalen Heizleistung ist, die Steuereinheit die Heizleistung der in der ersten-Zweit-Richtung angeordneten Heizeinheit auf die vorgegebene minimale Heizleistung setzt.

7. Elektroherd nach Anspruch 4, wobei, wenn die erste Position (510) die Endposition (520) in der ersten-Erst-Richtung ist, die erste Heizleistung die vorgegebene minimale Heizleistung ist und der erhitzte Gegenstand (400) in der ersten-Zweit-Richtung verschoben wird, die Steuereinheit die Einstellung dahingehend ändert, die Heizleistung der in der ersten-Zweit-Richtung angeordneten Heizeinheit proportional zu einem Verschiebeabstand zu erhöhen.

8. Elektroherd nach Anspruch 4, wobei, wenn die erste Position (510) die Endposition (530) in der ersten-Zweit-Richtung ist, die erste Heizleistung die vorgegebene maximale Heizleistung ist und der erhitzte Gegenstand (400) in der ersten-Erst-Richtung verschoben wird, die Steuereinheit die Einstellung dahingehend ändert, die Heizleistung der in der ersten-Erst-Richtung angeordneten Heizeinheit proportional zu einem Verschiebeabstand zu verringern.

9. Elektroherd nach Anspruch 3, wobei die erste Zusatzfunktion eine Sperrfunktion ist, bei der die Eingabeschnittstelle (300) in einen Sperrzustand gesetzt wird, während die Heizleistung der zweiten Position (920) auf die erste Heizleistung festgelegt ist, wenn der erhitzte Gegenstand (400) in der zweiten Richtung verschoben wird, und
die zweite Zusatzfunktion eine Timerfunktion ist, bei der die erste Heizleistung für eine spezifische Zeit beibehalten wird, während die Heizleistung der dritten Position (930) auf die erste Heizleistung festgelegt ist, und anschließend die erste Heizleistung ausgeschaltet wird, wenn der erhitzte Gegenstand (400) in der zweiten Richtung verschoben wird.

10. Elektroherd nach Anspruch 3, wobei die Zusatzfunktion eine Timerfunktion ist, wobei die Steuereinheit die Zeit des Timers proportional zu der Entfernung setzt, um die der erhitzte Gegenstand (400) in der zweiten Richtung verschoben wird.

11. Elektroherd nach Anspruch 10, wobei, wenn der erhitzte Gegenstand (400) verschoben wird und an einer Endposition (530) in der zweiten Richtung angeordnet wird und dann innerhalb einer vorgegebenen Zeit an der Endposition (530) in der zweiten Richtung erneut angeordnet wird, die Steuereinheit die Eingabeschnittstelle (300) steuert, um ein erstes Bild zur Einstellung der Zeit des Timers anzuzeigen.

12. Elektroherd nach Anspruch 11, wobei, wenn der erhitzte Gegenstand (400) in der ersten Richtung verschoben wird und dann innerhalb der vorgegebenen Zeit an der Endposition (530) in der zweiten Richtung erneut angeordnet wird, die Steuereinheit die Eingabeschnittstelle (300) steuert, um das erste Bild anzuzeigen.

13. Elektroherd nach Anspruch 11, wobei, wenn der erhitzte Gegenstand (400) angehoben und dann innerhalb der vorgegebenen Zeit an der Endposition (530) in der zweiten Richtung erneut angeordnet wird, die Steuereinheit die Eingabeschnittstelle (300) steuert, um das erste Bild anzuzeigen.

14. Elektroherd nach Anspruch 3, wobei die Heizeinheit eine Arbeitsspule ist, und wobei die Steuereinheit misst, um wie viel ein durch die Arbeitsspule fließender Resonanzstrom abgeschwächt wird, um festzustellen, ob der erhitzte Gegenstand (400) verschoben wurde.

15. Elektroherd nach Anspruch 3, wobei der Elektroherd ferner aufweist:
einen Lautsprecher, der auf der Oberseite der Abdeckplatte (119) angeordnet ist; und
ein Mikrofon, das auf der Oberseite der Abdeckplatte (119) angeordnet ist;
wobei, wenn der erhitzte Gegenstand (400) in einer ersten Richtung einer vertikalen Richtung und einer horizontalen Richtung auf der Oberseite der Abdeckplatte (119) verschoben wird, die Steuereinheit den Lautsprecher steuert, um eine Hinweisnachricht zur Anpassung von Heizleistungen von zwei oder mehr in der ersten Richtung angeordneten Heizeinheiten auszugeben, oder die Eingabeschnittstelle (300) steuert, um ein drittes Bild entsprechend der Hinweisnachricht anzuzeigen.

## Revendications

1. Table de cuisson électrique, comprenant :
un boîtier (125) ;
une pluralité d'unités de chauffage disposées dans le boîtier (125) et disposées à une pluralité de zones de manière à être espacées les unes des autres ;
une plaque de recouvrement (119) couplée à une face supérieure du boîtier (125) ;
une interface d'entrée (300) disposée sur une face supérieure de la plaque de recouvrement (119) et configurée pour afficher une image spécifique ; et
une unité de commande configurée pour commander les unités de chauffage et l'interface d'entrée (300), un objet à chauffer (400) étant disposé à une première position (510) sur la face supérieure de la plaque de recouvrement (119) et étant chauffé par l'unité de chauffage disposée à la première position (510),
dans lequel, lorsque l'objet chauffé (400) est déplacé dans une quelconque direction parmi une direction verticale et une direction horizontale sur la face supérieure de la plaque de recouvrement (119), l'unité de commande commande au moins l'une de l'interface d'entrée (300) et de l'unité de chauffage disposée dans ladite quelconque direction afin de fournir une fonction supplémentaire,
dans lequel la fonction supplémentaire est une fonction différente d'une fonction principale de l'unité de chauffage consistant à fournir une puissance de chauffage, et
dans lequel la fonction supplémentaire comprend une première fonction supplémentaire et une seconde fonction supplémentaire, dans lequel, lorsque l'objet chauffé (400) est déplacé vers une deuxième position (920) espacée d'une première distance par rapport à la première position (510) dans la deuxième direction, l'unité de commande fournit la première fonction supplémentaire, et
**caractérisée en ce que**,
lorsque l'objet chauffé (400) est déplacé vers une troisième position (930) espacée d'une deuxième distance par rapport à la première position (510) dans la deuxième direction, l'unité de commande fournit la seconde fonction supplémentaire,
dans lequel la deuxième position (920) ne chevauche pas la troisième position (930).

2. Table de cuisson électrique selon la revendication 1, dans laquelle la première fonction supplémentaire est une fonction de verrouillage dans laquelle l'interface d'entrée (300) est mise dans un état verrouillé, tandis que la puissance de chauffage de la deuxième position (920) est fixée à la première puissance de chauffage lorsque l'objet chauffé (400) est déplacé dans la deuxième direction, et
la seconde fonction supplémentaire est une fonction de minuterie dans laquelle la première puissance de chauffage est maintenue pendant un temps spécifique, tandis que la puissance de chauffage de la troisième position (930) est fixée à la première puissance de chauffage, et ensuite la première puissance de chauffage est coupée lorsque l'objet chauffé (400) est déplacé dans la deuxième direction.

3. Table de cuisson électrique selon la revendication 1,
dans laquelle, lorsque l'objet chauffé (400) est déplacé dans une première direction parmi une direction verticale et une direction horizontale sur la face supérieure de la plaque de recouvrement (119), l'unité de commande ajuste la puissance de chauffage de l'unité de chauffage disposée dans la première direction, et
lorsque l'objet chauffé (400) est déplacé dans une deuxième direction des directions verticale et horizontale, l'unité de commande commande au moins l'une de l'interface d'entrée (300) et de l'unité de chauffage disposée dans la deuxième direction afin de fournir la fonction supplémentaire,
dans lequel, lorsque l'objet chauffé (400) est déplacé vers une deuxième position (920) espacée d'une première distance par rapport à la première position (510) dans la deuxième direction, l'unité de commande fournit la première fonction supplémentaire, et
lorsque l'objet chauffé (400) est déplacé vers une troisième position (930) espacée d'une deuxième distance par rapport à la première position (510) dans la deuxième direction, l'unité de commande fournit la seconde fonction supplémentaire,
dans lequel la deuxième position (920) ne chevauche pas la troisième position (930).

4. Table de cuisson électrique selon la revendication 3, dans laquelle la première direction comprend une première-première direction et une première-deuxième direction, et la première-première direction est opposée à la première-deuxième direction,
dans laquelle, lorsque l'objet chauffé (400) est déplacé dans la première-première direction, l'unité de commande augmente ou maintient la puissance de chauffage de l'unité de chauffage disposée dans la première-première direction à partir de la première position (510), et
dans laquelle, lorsque l'objet chauffé (400) est déplacé dans la première-deuxième direction, l'unité de commande diminue ou maintient la puissance de chauffage de l'unité de chauffage disposée dans la première-deuxième direction à partir de la première position (510).

5. Table de cuisson électrique selon la revendication 4, dans laquelle, lorsque la première puissance de chauffage est inférieure à une puissance de chauffage maximale prédéterminée, l'unité de commande règle la puissance de chauffage de l'unité de chauffage disposée à une position d'extrémité (520) dans la première-première direction sur la puissance de chauffage maximale prédéterminée et augmente séquentiellement les puissances de chauffage des unités de chauffage disposées entre la première position (510) et la position d'extrémité (520) dans la première-première direction proportionnellement à une distance de déplacement, et
lorsque la première puissance de chauffage est égale à la puissance de chauffage maximale prédéterminée, l'unité de commande règle la puissance de chauffage de l'unité de chauffage disposée dans la première-première direction sur la puissance de chauffage maximale prédéterminée.

6. Table de cuisson électrique selon la revendication 4, dans laquelle, lorsque la première puissance de chauffage est supérieure à une puissance de chauffage minimale prédéterminée, l'unité de commande règle la puissance de chauffage de l'unité de chauffage disposée à une position d'extrémité (530) dans la première-deuxième direction sur la puissance de chauffage minimale prédéterminée et diminue séquentiellement les puissances de chauffage des unités de chauffage disposées entre la première position (510) et la position d'extrémité (530) dans la première-deuxième direction proportionnellement à une distance de déplacement, et
lorsque la première puissance de chauffage est égale à la puissance de chauffage minimale prédéterminée, l'unité de commande règle la puissance de chauffage de l'unité de chauffage disposée dans la première-deuxième direction sur la puissance de chauffage minimale prédéterminée.

7. Table de cuisson électrique selon la revendication 4, dans laquelle, lorsque la première position (510) est la position d'extrémité (520) dans la première-première direction, la première puissance de chauffage est la puissance de chauffage minimale prédéterminée et l'objet chauffé (400) est déplacé dans la première-deuxième direction, l'unité de commande modifie le réglage de manière à augmenter la puissance de chauffage de l'unité de chauffage disposée dans la première-deuxième direction proportionnellement à une distance de déplacement.

8. Table de cuisson électrique selon la revendication 4, dans laquelle, lorsque la première position (510) est la position d'extrémité (530) dans la première-deuxième direction, la première puissance de chauffage est la puissance de chauffage maximale prédéterminée et l'objet chauffé (400) est déplacé dans la première-première direction, l'unité de commande modifie le réglage de manière à diminuer la puissance de chauffage de l'unité de chauffage disposée dans la première-première direction proportionnellement à une distance de déplacement.

9. Table de cuisson électrique selon la revendication 3, dans laquelle la première fonction supplémentaire est une fonction de verrouillage dans laquelle l'interface d'entrée (300) est mise dans un état verrouillé, tandis que la puissance de chauffage de la deuxième position (920) est fixée à la première puissance de chauffage lorsque l'objet chauffé (400) est déplacé dans la deuxième direction, et
la seconde fonction supplémentaire est une fonction de minuterie dans laquelle la première puissance de chauffage est maintenue pendant un temps spécifique, tandis que la puissance de chauffage de la troisième position (930) est fixée à la première puissance de chauffage, et ensuite la première puissance de chauffage est coupée lorsque l'objet chauffé (400) est déplacé dans la deuxième direction.

10. Table de cuisson électrique selon la revendication 3, dans laquelle la fonction supplémentaire est une fonction de minuterie,
dans laquelle l'unité de commande règle le temps de la minuterie proportionnellement à la distance de déplacement de l'objet chauffé (400) dans la deuxième direction.

11. Table de cuisson électrique selon la revendication 10, dans laquelle, lorsque l'objet chauffé (400) est déplacé et disposé à une position d'extrémité (530) dans la deuxième direction puis est à nouveau disposé à la position d'extrémité (530) dans la deuxième direction dans un délai prédéterminé, l'unité de commande commande l'interface d'entrée (300) afin d'afficher une première image destinée au réglage du temps de la minuterie.

12. Table de cuisson électrique selon la revendication 11, dans laquelle, lorsque l'objet chauffé (400) est déplacé dans la première direction puis est à nouveau disposé à la position d'extrémité (530) dans la deuxième direction dans le délai prédéterminé, l'unité de commande commande l'interface d'entrée (300) afin d'afficher la première image.

13. Table de cuisson électrique selon la revendication 11, dans laquelle, lorsque l'objet chauffé (400) est soulevé puis est à nouveau disposé à la position d'extrémité (530) dans la deuxième direction dans le délai prédéterminé, l'unité de commande commande l'interface d'entrée (300) afin d'afficher la première image.

14. Table de cuisson électrique selon la revendication 3, dans laquelle l'unité de chauffage est une bobine de travail, et
dans laquelle l'unité de commande mesure l'atténuation d'un courant de résonance circulant dans la bobine de travail afin de déterminer si l'objet chauffé (400) a été déplacé.

15. Table de cuisson électrique selon la revendication 3, comprenant en outre :
un haut-parleur disposé sur la face supérieure de la plaque de recouvrement (119) ; et
un microphone disposé sur la face supérieure de la plaque de recouvrement (119) ;
dans lequel, lorsque l'objet chauffé (400) est déplacé dans une première direction parmi une direction verticale et une direction horizontale sur la face supérieure de la plaque de recouvrement (119), l'unité de commande commande le haut-parleur afin de délivrer un message de guidage relatif à l'ajustement des puissances de chauffage de deux ou plusieurs unités de chauffage disposées dans la première direction, ou commande l'interface d'entrée (300) afin d'afficher une troisième image correspondant au message de guidage.
